# EUROPÄISCHE PATENTANMELDUNG

(11) **EP 1 862 819 A1**
(43) Veröffentlichungstag der Anmeldung: **05.12.2007**
(21) Anmeldenummer: 07010750.3
(22) Anmeldetag: 31.05.2007
(51) Int. Cl.: G01S 17/93

(54) **Sensorsystem zur winkelaufgelösten Erfassung von Umgebungsobjekten**

(30) Priorität: 02.06.2006 DE 102006026301; 08.07.2006 DE 102006031553
(71) Anmelder: ADC Automotive Distance Control Systems GmbH, 88131 Lindau (DE)
(72) Erfinder: Randler, Martin, 88090 Immenstadt (DE); Schanz, Holger, 89604 Allmendingen (DE); Schneider, Klaus, 88131 Lindau (DE); Schaale, Christian, 88138 Lindau (DE)
(74) Vertreter: Büchner, Jörg

(57) **Zusammenfassung**

Es wird Sensorsystem zur winkelaufgelösten Detektion von Umgebungsobjekten woxgestellt. Die Senderzonen weisen ein raumwinkelabhängiges, inhomogenes Intensitätsprofil auf, wobei das Intensitätssprofil einer ersten Sendezone von dem einer zweiten Seudezone verschieden ist.

## Beschreibung

Die Erfindung betrifft ein Sensorsystem und ein Verfahren zur winkelaufgelösten Erfassung von Umgebungsobjekten. Ein solches System zur Umgebungsüberwachung kann z.B. in einem Kraftfahrzeug eingesetzt werden.
Eine bekannte Vorrichtung zur winkelaufgelösten Erfassung von Objekten in einer Umgebung ist ein Scannersystem. Mittels einer mechanischen Vorrichtung wird ein Sendestrahl nacheinander in verschiedene Sendezonen gelenkt. Befindet sich in einer Sendezone ein Objekt, wird der Strahl reflektiert, und mit einem Empfänger delektiert. Ein Scannersystem für eine Anwendung in Kraftfahrzeugen wird z. B. in EP 1407309 offenbart. Zum Abtasten der Umgebung wird ein schmaler Lichtstrahl mit einem rotierenden Prisma in verschiedene Winkelbereiche geschwenkt und die reflektierte Strahlung wird mit einem Empfänger detektiert. Anhand des Empfangssignals kann eine Aussage getroffen werden, ob sich ein Objekt in einem vorgegebenen Raumwinkelintervall befindet.
Ein weiteres Beispiel für eine winkelaufgelöste Erfassung von Umgebungsobjekten in einem Kraftfahrzeug wird in DE 197 17 399 angegeben. Hier wird ein Sensorsystem mit mehreren Sendern und Empfängern vorgestellt, wobei jeweils ein Sender und ein Empfänger auf dasselbe Zielgebiet ausgerichtet sind. Da mehrere Sender und Empfänger vorgesehen sind, umfasst das Sensorsystem mehrere Zielgebiete und es kann auch hier eine Aussage getroffen werden, ob sich ein Objekt in einem vorgegebenen Raumwinkelintervall (Zielgebiet) befindet.
Nachteilig an dem beschriebenen Stand der Technik ist, dass die Auflösung der Winkelmessung von der Anzahl der Zielgebiete abhängt. Werden wie bei einer Scannervorrichtung die Zielgebiete nacheinander beleuchtet, so ist eine große Anzahl von Messungen und damit eine lange Messzeit erforderlich um einen vorgegebenen Bereich zu erfassen, Werden die Zielgebiete durch eine Mehrzahl von Sender- und
Empfängerpaaren erfasst, ist eine Erhöhung der Anzahl der Zielgebiete mit einer Erhöhung der Anzahl der Sender- und Empfängerpaare verbunden und damit sehr kostenaufwändig.
Es ist daher Aufgabe der hier vorliegenden Erfindung, Umgebungsobjekte mit einem kostengünstigen System mit einer hohen Winkelauflösung zu erfassen.

Diese Aufgabe ist erfindungsgemäß gelöst durch ein Sensorsystem und ein Verfahren gemäß den unabhängigen Patentansprüchen Vorteilhafte Weiterbildungen sind den Unteransprüchen zu entnehmen.

Es wird ein Sensorsystem zur winkelaufgelösten Erfassung von Umgebungsobjekten angegeben, das zumindest zwei Sendezonen und zumindest eine Empfangszone umfasst. Die Sendezonen weisen ein raumwinkelabhängiges, inhomogenes Intensitätsprofil auf, wobei das raumwinkelabhängige Intensitätsprofil einer ersten Sendezone von dem einer zweiten Sendezone verschieden ist. Es sind z. B. in einer Ausgestaltung der Erfindung die Sendezonen auf unterschiedliche Zielgebiete ausgerichtet. Eine weitere vorteilhafte Ausgestaltung der Erfindung ist, die Sendezonen auf ein gleiches Zielgebiet auszurichten, in diesem Fall ist ein ungleicher Verlauf der Bestrahlungsintensität innerhalb der Sendezonen vorgesehen. Das erfindungsgemäße Sensorsystem ist so ausgestaltet, dass zumindest zwei der Sendezonen zumindest teilweise überlappen und in diesem Überlappungsbereich zumindest eine Empfangszone angeordnet ist. Durch diese Anordnung wird zumindest eine Empfangszone von zwei unterschiedlichen Sendern mit unterschiedlichen raumwinkelabhängigen Intensitätsprofilen beleuchtet.
In einer vorteilhaften Ausgestaltung der Erfindung sind Mittel vorgesehen, um die Sendezonen zeitlich versetzt zu beleuchten. In einer weiteren Ausgestaltung der Erfindung sind N Sendezonen und N+1 Empfangszonen vorgesehen. Die Sende- und Empfangszonen sind z. B. so angeordnet, dass zumindest eine der Sendezonen mit zumindest zwei Empfangszonen überlappt. Optional kann das Sensorsystem zur winkelaufgelösten Erfassung von Umgebungsobjekten mit Mitteln versehen werden, die für eine Pulslaufzeitmessung vorgesehen sind.

In einer weiteren vorteilhaften Ausgestaltung des Systems ist eine winkelaufgelöste Erfassung in horizontaler und in vertikaler Richtung vorgesehen. Dazu wird beispielhaft die ortsaufgelöste Erfassung von Objekten in vertikaler Richtung näher erläutert. Dies dient der besseren Verständlichkeit und der Schutzbereich dieser Anmeldung soll sich nicht auf die Ortsauflösung in vertikaler Raumrichtung beschränken. Für den Fachmann ist offensichtlich, dass die im Folgenden beschriebene Anordnung z. B. nur um 90 Grad gedreht werden muss, um eine Ortsauflösung in horizontaler Richtung zu erreichen.
Das beanspruchte Sensorsystem weist in einer vorteilhaften Ausgestaltung eine Anzahl von Empfangselementen, die in der horizontalen Ebene angeordnet sind, auf. Zudem ist ein optisches Mittel vor den Empfangselementen vorgesehen. Das optische Mittel ist derart ausgestaltet ist, dass reflektierte Strahlung in Abhängigkeit von der vertikalen Position des erfassten Objekts von einem oder mehreren vorgegebenem Empfangselement(en) detektiert wird.
In einer weiteren vorteilhaften Ausgestaltung des Sensorsystems sind optische Mittel vor Sender und Empfänger vorgesehen. Die optischen Mittel weisen eine Keilstruktur auf einem Teil der Oberfläche auf. Die Keilstruktur ist in ihrer Wirkung vergleichbar mit Miniprismen. Durch diese besondere Struktur wird die gesendete Strahlung in vertikale Richtung ablenkt. Strahlung, die von hohen Objekten reflektiert wird über die Keilstruktur auf vorgegebene Empfangselemente abgelenkt, die nicht identisch mit den Empfangselementen sind, auf die von niedrigen Objekten reflektierte Strahlung gelenkt wird.

In einer vorteilhaften Ausgestaltung der Erfindung wird das beanspruchte Sensorsystem in einem Kraftfahrzeug verwendet. Das Kraftfahrzeug ist mit einem Fahrerassistenz-oder Sicherheitssystem ausgestattet, das ein Sensorsystem zur Umgebungsüberwachung wie beansprucht umfasst.
Zudem wird ein Verfahren zur winkelaufgelösten Erfassung von Umgebungsobjekten mit einem Sensorsystem beansprucht. Das Verfahren sieht vor, dass die zumindest zwei Sendezonen, die zumindest teilweise überlappen und in deren Überlappungsbereich zumindest eine Empfangszone angeordnet ist, zeitlich versetzt beleuchtet werden. Der Raumwinkel des Objekts wird anhand der zumindest zwei zeitlich versetzt zueinander aufgenommenen Empfangssignale in einer Empfangszone bestimmt- Die Empfangssignale werden mit verschiedenen Sendeprofilen aufgenommen, so dass ein Objekt in einem vorgegebenen Raumbereich zweimal erfasst wird. Die verwendeten Beleuchtungsintensitäten der zeitlich versetzt erfolgenden Messungen sind in Abhängigkeit vom Raumwinkel in einer vorgegebenen Weise miteinander korreliert. Genau diese Korrelation weisen auch die zumindest zwei Empfangssignale auf. Der Raumwinkel des Objekts wird durch eine geeignete Verknüpfung der evt. vorverarbeiteteten Empfangssignale (Differenz-, Summen-, Verhältnisbildung, etc.) bestimmt.
Ein weiteres Verfahren zum Betrieb des Sensorsystems sieht vor, dass die zumindest zwei Sendezonen, die zumindest teilweise überlappen und in deren Überlappungsbereich zumindest eine Empfangszone angeordnet ist, gleichzeitig aktiv sind und ein Empfangssignal in der zumindest einen Empfangszone aufgenommen wird. Ein weiteres Verfahren zum Betrieb eines Sensorsystems, bei dem zumindest eine der Sendezonen mit zumindest zwei Empfangszonen überlappt, sieht vor dass jeweils nur eine Sendezone beleuchtet wird. Die Empfangssignale der beiden Empfangszonen, die mit der beleuchteten Sendezone überlappen, werden zusammengefasst. Die beiden zuletzt genannten Verfahren werden vorzugsweise bei einem geringen Empfangssignal angewendet. So können z. B. Objekte detektiert werden, deren Empfangssignal bei dem zuerst beschriebenen Verfahren nicht für eine sichere Objekterfassung ausreichend ist. Die erhöhte Empfindlichkeit des Sensors geht mit einer reduzierten Winkelauflösung einher, es kann nur noch eine Aussage getroffen werden, ob sich ein Objekt in einem vorgegebenen Empfangsbereich befindet. Es ist vorteilhaft, z. B. bei einem geringen Empfangssignal, das erstgenannte Verfahren mit einem der beiden zuletzt genannten zu kombinieren.

Die Erfindung wird nachfolgend anhand von Ausführungsbeispielen und Abbildungen näher erläutert.
Fig. 1: Zwei Sendezonen mit einer gemeinsamen Empfangszone
Fig. 2: Sensorsystem mit N Sendezonen und mit N+1 Empfangszonen
Fig.3: Messverfahren für ein Sensorsystem mit sieben Sendezonen und mit acht Empfangszonen
Fig.4: Schematische Darstellung einer ortsaufgelösten Messung in vertikaler Richtung

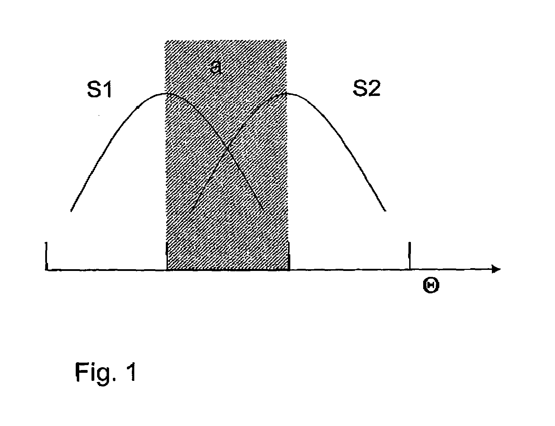

In Figur 1 ist ein Ausführungsbeispiel für ein Sensorsystem zur winkelaufgelösten Erfassung von Umgebungsobjekten mit zwei Sendezonen S1, S2 und einer Empfangszone a dargestellt. Die Sendezonen S1, S2 sind in unterschiedliche Zielgebiete gerichtet und überlappen in dem schraffiert markierten Winkelbereich. In diesem Überlappungsbereich ist die gemeinsame Empfangszone a angeordnet. In diesem Ausführungsbeispiel ist die Überlappungszone deckungsgleich mit der gemeinsamen Empfangszone a, diese kann aber in anderen Ausgestaltungen der Erfindung nur einen Teilbereich des Überlappungsbereichs einnehmen. Die Sendezonen S1 und S2 weisen ein inhomogenes Intensitätsprofil auf. Das Intensitätsprofil der Sendezonen S1 und S2 ist insbesondere in der Empfangszone a verschieden.

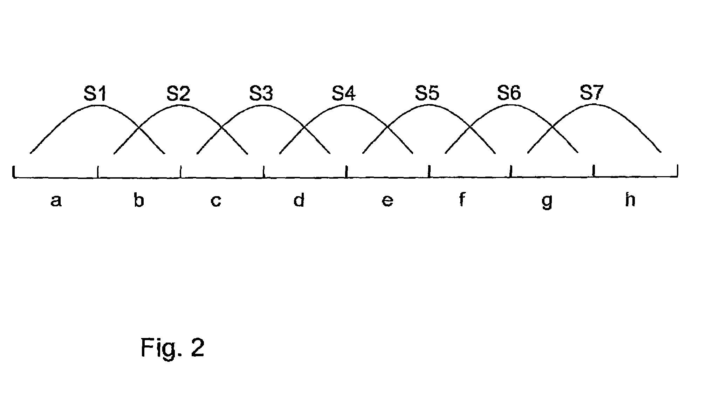

In Figur 2 ist ein Sensorsystem mit N Sendezonen und N+1 Empfangszonen abgebildet. Die 7 Sendezonen a-h sind so angeordnet, dass alle in verschiedene Raumrichtungen ausgerichtet sind und benachbarte Sendezonen überlappen. In den sechs benachbarten Tjberlappungsbereichen sind die Empfangszonen b-g angeordnet. Die Empfangszonen b-g sind von also separat von zwei verschiedenen Sendezonen bestrahlbar. Die Empfangszonen a und h liegen am Rand und überlappen nur mit jeweils einer Sendezone.
In einem besonderen Ausführungsbeispiel der Erfindung ist das Sensorsystem werden nur Erfassungsbereiche berücksichtigt, die Empfangszonen aufweisen, die separat von zwei verschiedenen Sendezonen bestrahlbar sind. In diesem Beispiel entfallen die Empfangszonen a und h.
In einem weiteren Ausführungsbeispiel sind N Sendezonen und N+2 Empfangszonen vorgesehen. Die Sendezonen sind auf unterschiedliche Bereiche ausgerichtet und weisen ein inhomogenes Intensitätsprofil auf In diesem Beispiel überlappt eine Sendezone mit drei Empfangszonen und nicht mit zwei Empfangszonen, wie in Figur 2 dargestellt. Drei Sendezonen überlappen teilweise und im Überlappungsbereich sind zwei Empfangszonen angeordnet. Mit dieser Anordnung sind N-2 Empfangszonen separat von drei verschiedenen Sendezonen aus bestrahlbar. Die beiden äußersten Empfangszonen überlappen analog zu dem in Figur 2 dargestellten Beispiel nur mit jeweils einer Sendezone. Die jeweilig benachbarten Empfangszonen sind von zwei Sendezonen aus bestrahlbar. Auch hier ist eine Einschränkung auf den Kern des Erfassungsbereichs denkbar, bei dem N Sender und N oder N-2 Empfänger vorgesehen sind.
Es ist für den Fachmann leicht ersichtlich, dass diese Reihe mit Beispielen fortgesetzt werden kann, bei dem vier, fünf Sendezonen derart überlappen, dass zumindest eine Empfangszone von vier, fünf, etc. verschiedenen Sendezonen aus bestrahlbar ist.
Mehrere Ausgestaltungsformen des erfindungsgemäßen Sensorsystems bezüglich der Sendevorrichtung sind möglich. In einem Ausführungsbeispiel ist ein Sender vorgesehen, ein Scanner lenkt die Strahlung nacheinander in die Sendezonen. Ein weiteres Ausführungsbeispiel sieht ein Sensorsystem mit einer Sendequelle pro Sendezone vor sein. Das hier vorgestellte Sensorsystem ist z.B. mit Radar-, Infrarot-, Ultraschallstrahlung etc. ausführbar. Ist zum Sensorbetrieb eine Wellenlänge im optischen oder Infraroten Spektralbereich vorgesehen, dann ist der Einsatz von Halbleiterstrukturen wie LEDs oder VCSEL vorteilhaft.
Sieht die Ausführung der Erfindung eine Sendequelle pro Sendezone vor, so kann im Betrieb sowohl der gesamte Erfassungsbereich, der sich aus den Einzelbereichen S,S1-SN zusammensetzt, gleichzeitig bestrahlt werden oder es besteht die Möglichkeit die Einzelbereiche S,S1-SN sukzessive oder beliebige Kombinationen der Einzelbereiche S,S1-SN zu beleuchten.

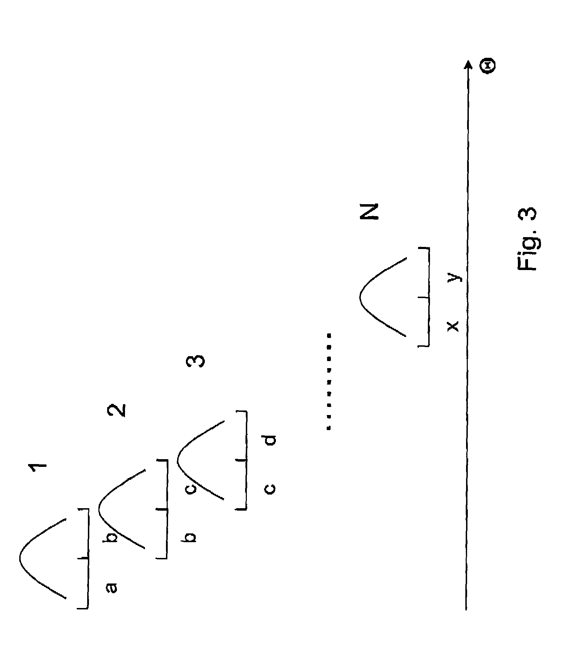

In Figur 3 ist ein Verfahren zum Betrieb eines Sensorsystems mit N Sensorzonen und N+1 Empfangszonen, wie zuvor beschrieben, skizziert. Es sind N Subzyklen für einen Erfassungszyklus vorgesehen. In dem ersten Subzyklus wird die Sendezone S1 beleuchtet, die mit den Empfangszonen a und b überlappt. In dem zweiten Subzyklus wird die Sendezone S2 beleuchtet, die mit den Empfangszonen b und c überlappt und so fort. Die Empfangszone b wird also zunächst von S1 mit einem charakteristischen Intensitätsprofil beleuchtet und danach mit einem für S2 charakteristischen Intensitätsprofil. Die Intensitätsprofile von S 1 und S2 sind raumwinkelabhängig und im Bereich der Empfangszone b nicht identisch. Ein Objekt im Empfangsbereich b wird also in zwei zeitlich versetzt erfolgenden Messungen mit unterschiedlichen Strabhntensitäten erfasst, die charakteristisch für den Raumwinkel sind, in dem sich das Objekt befindet. Der Raumwinkel Θ des Objekts wird also direkt aus dem Verhältnis bzw. der Differenz der nacheinander aufgenommenen Empfangssignale bestimmt. Die Empfangszonen c-g werden wie b ausgewertet.
In einem weiteren Ausführungsbeispiel variiert die Ablaufreihenfolge derart, dass immer nur ein beliebiger Sender aktiv ist. So werden z. B. Regionen mit potentiell gefahrlichen Objekten gezielt mit einer hohen Wiederholmte überwacht.
In einer weiteren, Messzeit optimierten Ausgestaltung der Erfindung sind mehrere Sender gleichzeitig aktiv. Es ist jedoch darauf zu achten, dass eine Empfangszone zu jedem Zeitpunkt nur von einer Sendezone bestrahlt wird Dies kann bei einem in Figur 2 dargestellten Sensorsystem z.B. dadurch erreicht werden, dass zunächst die Sendezonen, die mit geraden Ziffern bezeichnet sind, beleuchtet werden und danach die Sendezonen, die mit ungeraden Ziffern bezeichnet sind. Die Auswertung des Empfangssignals erfolgt wie zuvor beschrieben. Es ist für den Fachmann naheliegend, ähnliche zeitoptimierte Messzyklen auch z. B. für die zuvor beschriebenen Sensorsysteme mit vier, fünf oder mehr überlappenden Sendezonen anzuwenden.

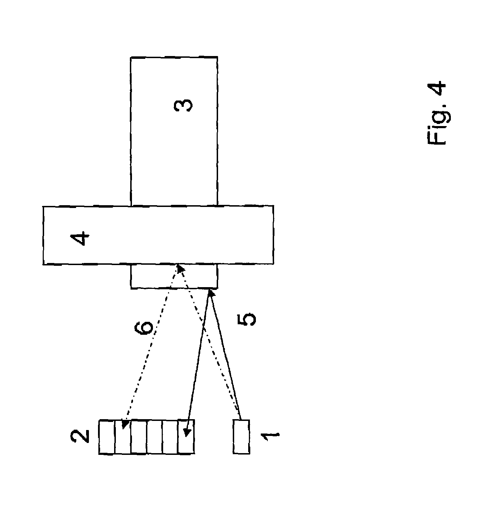

In Fig.4 ist eine ortsaufgelöste Messung in vertikaler Richtung schematisch dargestellt. Ein Sender 1 emittiert Strahl 5 und 6 in verschiedene vertikale Raumrichtungen. In diesem Beispiel werden mit Strahl 5 Objekte, die sich ungefähr auf Sensorhöhe befinden, detektiert. In diesem Beispiel ist das ein vorausfahrendes Fahrzeug 3. Strahl 6 ist zur Erfassung hoher Objekte geeignet. In diesem Beispiel ist das eine Brücke 4 über der Fahrbahn des Fahrzeugs mit Sensorsystem. Die Empfangselemente 2 sind in horizontaler Richtung angeordnet. Es ist deutlich erkennbar, dass Strahl 5 auf andere Empfangselemente als Strahl 6 gelenkt wird und somit eine ortsaufgelöste Detektion erfolgt. Diese Wirkung wird mit Hilfe zusätzlicher Oberflächenstrukturen auf der Linse für Sender und Empfänger erreicht. Die zusätzlichen Oberflächenstrukturen bewirken eine definierte horizontale Abweichung relativ zum regulären Sichtfeld, das durch die Linsenkrümmung des optischen Mittels vorgegeben ist. Diese horizontale Abweichung wird so eingestellt, dass das Nutzsignal im regulären Sichtfeld und das Nutzsignal der vertikalen Sichtfelderweiterung auf horizontal getrennte Empfangselemente treffen. Damit können in der anschließenden Signalverarbeitung die Nutzsignale von Objekten im regulären Sichtfeld, das durch Strahl 5 abgedeckt wird, und im erweiterten Sichtfeldbereich, der durch Strahl 6 abgedeckt wird, eindeutig zugeordnet und verarbeitet werden. In einer vorteilhaften Ausgestaltung der Erfindung ist die Oberflächenstruktur in die Linsenoberflächen von Sende- und Empfangslinse integriert. Diese Struktur wird so gestaltet, dass jeder emittierte Lichtstrahl im erweiterten Sichtfeld um einen fixen horizontalen Winkel abgelenkt wird und auf ein Empfangselement trifft, das keine Empfangssignale aus dem regulären Sichtfeld empfängt.
Die Oberflächenstruktur, die Sende- bzw. Empfangslinse teilweise bedeckt, besteht aus einer optischen Keilstruktur. Bei einer annähernd homogenen Intensitätsverteilung des Senders wird durch das Verhältnis der Fläche, die diese Keilstruktur bedeckt, zur Gesamtfläche der relative Anteil der Strahlungleistung definiert, die für die Ausleuchtung bzw. Detektion des erweiterten Sichtbereichs ausgekoppelt wird. Die Keilstruktur weist eine geometrische Struktur dergestalt auf, dass Lichtstrahlen in den gesamten vertikalen Winkelbereich abgelenkt werden und damit der vertikale Sichtbereich vollständig ausgeleuchtetl wird. Eine zusätzliche Horizontalablenkung wird durch eine zusätzliche horizontale Verkippung der oben beschriebenen Keilstruktur erzeugt. Hierbei erfolgt eine horizontale Ablenkung um einen definierten und konstanten Winkel sowohl auf Sende- als auch auf Empfangsseite.

In einer weiteren Ausgestaltung der Erfindung werden anstelle eines horizontalen Ablenkwinkels zumindest zwei unterschiedliche horizontale Ablenkwinkel erzeugt, so dass das Nutzsignal aus dem regulären Sichtfeld und dem erweiterten Sichtfeldbereich auf mehrere unterschiedliche Empfangselemente trifft und für die Signalverarbeitung zur Verfügung steht. In einer weiteren Ausgestaltung werden die genannten mehreren horizontalen Ablenkwinkel den vertikalen Ablenkwinkeln eindeutig zugeordnet. Mit dieser Anordnung wird eine vertikale und horizontale Auflösung von Objekten realisiert.

## Patentansprüche

1. Sensorsystem zur winkelaufgelösten Erfassung von Umgebungsobjekten, **dadurch gekennzeichnet, dass**
die Senderzonen ein raumwinkelabhängiges, inhomogenes Intensitätsprofil aufweisen, wobei das raumwinkelabhängige, inhomogene Intensitätsprofil einer ersten Sendezone von dem einer zweiten Sendezone verschieden ist

2. Sensorsystem nach Anspruch 1, wobei zumindest ein regulärer Erfassungsbereich in horizontaler Richtung vorgesehen ist, der Objekte erfasst die sich im Wesentlichen auf einer Höhe mit dem Sensor befinden,
**dadurch gekennzeichnet, dass**
ein Teil der gesendeten Strahlung zudem in vertikaler Richtung abgelenkt wird, und damit hohe Objekte außerhalb des regulären Erfassungsbereiches des Sensors bestrahlt werden, wobei sowohl für Sender - als auch Empfänger optische Mittel derart vorgesehen sind, dass Signale aus dem vertikalen zusätzlichen Erfassungsbereich von jeweils anderen Empfangselementen detektiert werden als Signale aus dem regulären Sichtbereich.

3. Sensorsystem nach Anspruch 1, wobei eine winkelaufgelöste Erfassung in einer ersten Raumrichtung vorgesehen ist,
**dadurch gekennzeichnet, dass**
wobei eine Anzahl von Empfangselementen in einer zweiten Raumrichtung, die insbesondere senkrecht zu der ersten Raumrichtung steht, angeordnet und ein optisches Mittel vor den Empfangselementen derart ausgestaltet ist, dass reflektierte Strahlung in Abhängigkeit von der Position des erfassten Objekts in der ersten Raumrichtung von einem oder mehreren vorgegebenem Empfangselement detektiert wird.

4. Sensorsystem nach Anspruch 3, wobei optische Mittel vor Sender und Empfänger vorgesehen sind,
**dadurch gekennzeichnet, dass**
die optischen Mittel eine Keilstruktur auf einem Teil der Oberfläche aufweisen, die die gesendete Strahlung in vertikaler Richtung ablenkt, bzw. Strahlung, die von hohen Objekten reflektiert wird auf vorgegebene Empfangselemente lenkt.

5. Sensorsystem nach einem der vorherigen Ansprüche,
**dadurch gekennzeichnet, dass**
o das Sensorsystem zumindest zwei Senderzonen und zumindest eine Empfangszone umfasst, die insbesondere entlang der zweiten Raumrichtung angeordnet sind, und
o zumindest zwei der Sendezonen zumindest teilweise überlappen und in diesem Überlappungsbereich zumindest eine Empfangszone angeordnet ist.

6. Sensorsystem nach Anspruch 5,
**dadurch gekennzeichnet, dass**
Mittel vorgesehen sind, die Sendezonen zeitlich versetzt zu beleuchten

7. Sensorsystem nach einem der vorherigen Ansprüche 5 oder 6,
**dadurch gekennzeichnet, dass**
zumindest eine der Sendezone mit zumindest zwei Empfangszonen überlappt.

8. Sensorsystem nach einem der vorherigen Ansprüche 5-7,
**dadurch gekennzeichnet, dass**
eine Anzahl von N Sendezonen und eine Anzahl von N+1 Empfangszonen vorgesehen sind.

9. Sensorsystem nach einem der vorherigen Ansprüche 5-8
**dadurch gekennzeichnet, dass**
Mittel für eine Pulslaufzeitmessung vorgesehen sind.

10. Kraftfahrzeug mit Fahrerasssistenz oder Sicherheitssystem basierend auf einem Sensorsystem zur Umgebungsüberwachung nach einem der vorherigen Ansprüche.

11. Verfahren zur winkelaufgelösten Erfassung von Umgebungsobjekten mit einem Sensorsystem nach einem der vorherigen Ansprüche 5-10,
**dadurch gekennzeichnet, dass**
die zumindest zwei der Sendezonen, die zumindest teilweise überlappen und in deren Überlappungsbereich zumindest eine Empfangszone angeordnet ist, zeitlich versetzt beleuchtet werden, wobei der Raumwinkel des Objekts anhand von zumindest zwei Empfangssignalen, aufgenommen mit verschiedenen Sendeprofilen, innerhalb einer Empfangszone bestimmt wird.

12. Verfahren zur winkelaufgelösten Erfassung von Umgebungsobjekten mit einem Sensorsystem nach Anspruch 5-10,
**dadurch gekennzeichnet, dass**
die zumindest zwei der Sendezonen, die zumindest teilweise überlappen und in deren Überlappungsbereich zumindest eine Empfangszone angeordnet ist, gleichzeitig aktiv sind und ein Empfangssignal in der zumindest einen Empfangszone aufgenommen wird.

13. Verfahren zur winkelaufgelösten Erfassung von Umgebungsobjekten mit einem Sensorsystem nach Anspruch 7,
**dadurch gekennzeichnet, dass**
jeweils nur eine Sendezone beleuchtet wird und das Empfangssignal der beiden Empfangszonen, die mit der beleuchteten Sendezone überlappen, zusamumengefasst wird.
